# FASCICULE DE BREVET EUROPEEN

(11) **EP 4 143 606 B1**
(45) Date de publication et mention de la délivrance du brevet: **14.02.2024**
(21) Numéro de dépôt: 21717927.4
(22) Date de dépôt: 16.04.2021
(51) Int. Cl.: G01S 15/89, G01S 7/52, B06B 1/02, B06B 1/06

(54) **DISPOSITIF D'IMAGERIE ULTRASONORE**
ULTRASCHALLBILDGEBUNGSVORRICHTUNG
ULTRASOUND IMAGING DEVICE

(30) Priorité: 30.04.2020 FR 2004326
(43) Date de publication de la demande: 08.03.2023
(73) Titulaire: Moduleus, 37100 Tours (FR)
(72) Inventeur: CONSTANS, Charlotte, 37100 TOURS (FR); BAILLY, Adrien, 37100 TOURS (FR)
(74) Mandataire: Cabinet Beaumont
(86) Numéro de dépôt international: PCT/EP2021/059893
(87) Numéro de publication internationale: WO 2021/219402

(56) Documents cités:
- EP-A2- 1 491 913
- WO-A1-2020/053309
- US-A1- 2009 005 684

## Description

La présente demande de brevet revendique la priorité de la demande de brevet français FR20/04326.

### Domaine technique

La présente description concerne le domaine de l'imagerie ultrasonore, et vise plus particulièrement un dispositif d'imagerie ultrasonore comportant une pluralité de transducteurs ultrasonores et un circuit électronique de commande de ces transducteurs.

Les documents EP1491913 et US2009/005684 décrivent des exemples de dispositifs d'imagerie ultrasonore configurables.

### Technique antérieure

Un dispositif d'imagerie ultrasonore comprend classiquement une pluralité de transducteurs ultrasonores, et un circuit électronique de commande connecté aux transducteurs. En fonctionnement, l'ensemble des transducteurs est disposé face à un corps dont on souhaite acquérir une image. Le circuit électronique de commande est configuré pour appliquer des signaux électriques d'excitation aux transducteurs, de façon à provoquer l'émission d'ondes ultrasonores par les transducteurs, en direction du corps à analyser. Les ondes ultrasonores émises par les transducteurs sont réfléchies par le corps à analyser (par sa structure interne et/ou superficielle), puis reviennent vers les transducteurs qui les convertissent à nouveau en signaux électriques. Ces signaux électriques de réponse sont lus par le circuit électronique de commande, et peuvent être mémorisés et analysés pour en déduire des informations sur le corps étudié.

Les transducteurs ultrasonores peuvent être disposés en barrette dans le cas de dispositifs d'acquisition d'images bidimensionnelles, ou en matrice dans le cas de dispositifs d'acquisition d'images tridimensionnelles. Dans le cas d'un dispositif d'acquisition d'images bidimensionnelles, l'image acquise est représentative d'une coupe du corps étudié dans un plan défini par l'axe d'alignement des transducteurs de la barrette d'une part, et par la direction d'émission des transducteurs d'autre part. Dans le cas d'un dispositif d'acquisition d'images tridimensionnelles, l'image acquise est représentative d'un volume défini par les deux directions d'alignement des transducteurs de la matrice et par la direction d'émission des transducteurs.

On s'intéresse ici plus particulièrement aux dispositifs d'acquisition d'images tridimensionnelles. Dans de tels dispositifs, le nombre de transducteurs ultrasonores peut être très élevé, typiquement de plusieurs centaines à plusieurs milliers, voire supérieur.

On a déjà proposé des dispositifs d'acquisition d'images ultrasonores tridimensionnelles dans lesquels, pour limiter la complexité du circuit électronique de commande, un même circuit d'émission-réception est partagé par plusieurs transducteurs ultrasonores, au travers d'un circuit de multiplexage configurable. Des exemples de réalisation et de modes de fonctionnement de tels dispositifs sont notamment décrits dans la demande de brevet FR3086063 précédemment déposée par la demanderesse.

Il serait souhaitable d'améliorer au moins en partie un ou plusieurs aspects des dispositifs d'acquisition d'images ultrasonores tridimensionnelles connus.

### Résumé de l'invention

Pour cela, un mode de réalisation prévoit un dispositif d'imagerie ultrasonore comportant un ensemble de transducteurs ultrasonores répartis en une pluralité de sous-ensembles de P transducteurs chacun, le dispositif comportant, pour chaque sous-ensemble :
- K circuits d'émission-réception ; et
- un circuit de routage configurable reliant les P transducteurs du sous-ensemble aux K circuits d'émission-réception,

dans lequel P et K sont des entiers supérieurs ou égaux à 2, avec K strictement inférieur à P,
et dans lequel chaque sous-ensemble comprend au moins un transducteur, dit transducteur mobile, pouvant être, par l'intermédiaire du circuit de routage, déconnecté ou connecté à l'un quelconque parmi plusieurs circuits d'émission-réception prédéfinis parmi les K circuits d'émission-réception du sous-ensemble.

Selon l'invention, chaque sous-ensemble comprend en outre au moins un transducteur, dit transducteur fixe, pouvant être, par l'intermédiaire du circuit de routage du sous-ensemble, déconnecté ou connecté à un unique circuit d'émission-réception prédéfini parmi les K circuits d'émission-réception du sous-ensemble.

Selon un mode de réalisation, les transducteurs de l'ensemble sont disposés selon des rangées et des colonnes.

Selon un mode de réalisation, les transducteurs de l'ensemble sont disposés selon une matrice.

Selon un mode de réalisation, les transducteurs de l'ensemble forment un motif de forme générale circulaire.

Selon un mode de réalisation, chaque sous-ensemble est une matrice de transducteurs voisins de l'ensemble.

Selon un mode de réalisation, chaque sous-ensemble comprend une pluralité de transducteurs mobiles, disposés selon une diagonale de la matrice de transducteurs voisins formant le sous-ensemble.

Selon un mode de réalisation, chaque sous-ensemble comprend une pluralité de transducteurs fixes, 103(c)) disposés selon une autre diagonale de la matrice de transducteurs voisins formant le sous-ensemble.

Selon un mode de réalisation, chaque sous-ensemble est une sous-matrice de 2x2 transducteurs voisins.

Selon un mode de réalisation, le dispositif comprend en outre un circuit de contrôle adapté à commander les circuits de routage configurables des différents sous-ensembles.

Selon un mode de réalisation, le circuit de contrôle est configuré pour, lors d'une phase d'acquisition d'une image ultrasonore, dans chaque sous-ensemble de transducteurs :
- connecter les P transducteurs du sous-ensemble aux K circuits d'émission-réception du sous-ensemble par l'intermédiaire du circuit de routage configurable du sous ensemble pendant une phase d'émission d'une onde ultrasonore ; puis
- connecter un unique transducteur du sous-ensemble à chaque circuit d'émission-réception du sous-ensemble pendant une phase de réception d'un écho de l'onde ultrasonore émise.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une vue en perspective schématique d'un exemple d'un dispositif d'acquisition d'images ultrasonores selon un mode de réalisation ;
la figure 2 illustre plus en détail un exemple de réalisation d'un circuit de routage configurable du dispositif de la figure 1 ;
la figure 3 illustre un exemple d'un procédé d'acquisition d'une image ultrasonore au moyen du dispositif de la figure 1 ; et
la figure 4 illustre schématiquement une variante de réalisation du dispositif des figures 1 et 2 et du procédé d'acquisition de la figure 3.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les diverses applications que peuvent avoir les dispositifs d'imagerie décrits n'ont pas été détaillées, les modes de réalisation décrits étant compatibles avec les applications usuelles des dispositifs d'imagerie ultrasonore. De plus, les propriétés (fréquences, formes, amplitudes, etc.) des signaux électriques d'excitation appliqués par le circuit de commande aux transducteurs ultrasonores n'ont pas été détaillées, les modes de réalisation décrits étant compatibles avec les signaux d'excitation usuellement utilisés dans les systèmes d'imagerie ultrasonore, qui peuvent être choisis en fonction de l'application considérée et en particulier de la nature du corps à analyser et du type d'information que l'on cherche à acquérir. De façon similaire, les divers traitements appliqués aux signaux électriques fournis par les transducteurs ultrasonores et lus par le circuit de commande pour extraire des informations utiles sur le corps à analyser n'ont pas été détaillés, les modes de réalisation décrits étant compatibles avec les traitements usuellement utilisés dans les systèmes d'imagerie ultrasonore. De plus, la réalisation des transducteurs ultrasonores et du circuit de commande des dispositifs d'imagerie décrits n'a pas été détaillée, la réalisation détaillée de ces éléments étant à la portée de l'homme du métier à partir des indications de la présente description, en utilisant des techniques connues de réalisation de transducteur ultrasonores et de circuits électroniques.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

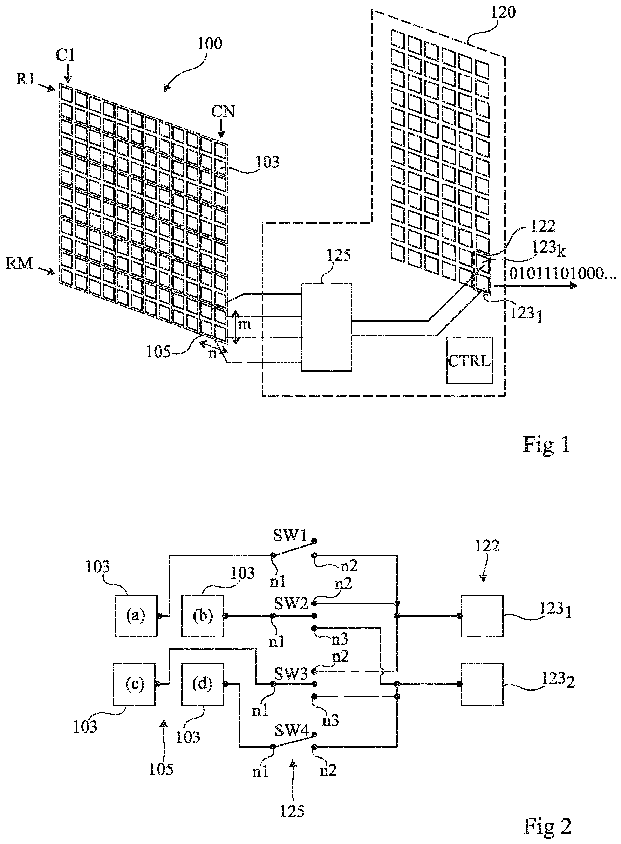

La figure 1 est une vue en perspective schématique d'un exemple d'un dispositif d'acquisition d'images ultrasonores selon un mode de réalisation.

Le dispositif de la figure 1 comprend une matrice 100 de transducteurs ultrasonores élémentaires 103, agencés selon M rangées Ri, avec i entier allant de 1 à M, et N colonnes Cj, avec j entier allant de 1 à N, M et N étant des entiers supérieurs ou égaux à 2. Dans l'exemple représenté, M = N = 12. Les modes de réalisation décrits ne se limitent bien entendu pas à ce cas particulier. On notera en particulier que les valeurs M et N peuvent être différentes l'une de l'autre. Les transducteurs élémentaires 103 sont par exemple tous identiques, aux dispersions de fabrication près. Les transducteurs 103 peuvent être des transducteurs de type CMUT (transducteurs ultrasonores capacitifs à membrane), des transducteurs piézoélectriques, des transducteurs à cristal, ou tout autre type de transducteurs ultrasonores.

Dans l'exemple de la figure 1, la matrice 100 est divisée en une pluralité de sous-matrices 105 de transducteurs voisins comportant chacune plusieurs rangées et plusieurs colonnes. Par transducteurs voisins, on entend ici que, dans chaque sous-matrice 105, les transducteurs 103 de la sous-matrice sont groupés, c'est-à-dire qu'aucun transducteur 103 d'une autre sous-matrice 105 n'est disposé entre deux transducteurs 103 de la sous-matrice. Autrement dit, chaque sous-matrice 105 est constituée par l'ensemble des transducteurs 103 situés à l'intersection d'un ensemble de plusieurs rangées Ri consécutives et de plusieurs colonnes Cj consécutives de la matrice 100. Dans l'exemple de la figure 1, les sous-matrices 105 ne se recouvrent pas, c'est-à-dire que chaque transducteur 103 appartient à une et une seule sous-matrice 105 du dispositif. Les sous-matrices 105 ont par exemple toutes les mêmes dimensions. Par la suite, on désigne respectivement par m et n le nombre de rangées et le nombre de colonnes de chaque sous-matrice 105, avec m et n entiers supérieurs ou égaux à 2. Dans l'exemple représenté, m=n=2. Les modes de réalisation décrits ne se limitent bien entendu pas à ce cas particulier. On notera en particulier que les valeurs m et n peuvent être différentes l'une de l'autre. De préférence, M est un multiple de m et N est un multiple de n. Ainsi, la matrice 100 est divisée en (M/m)*(N/n) sous-matrices 105 disposées selon un agencement matriciel. Dans l'exemple de la figure 1, la matrice 100 est divisée en 6x6 sous-matrices 105.

Le dispositif de la figure 1 comprend en outre un circuit électronique de commande 120 connecté aux transducteurs 103 de la matrice 100. Le circuit électronique de commande 120 comprend, pour chaque sous-matrice 105 de la matrice 100 :
- un ensemble 122 de K circuits d'émission-réception 123ₖ dédiés spécifiquement aux m*n transducteurs de la sous-matrice 105, avec K entier supérieur ou égal à 2 et strictement inférieur au nombre P=m*n de transducteurs de la sous-matrice 105, et k entier allant de 1 à K ; et
- un circuit de routage configurable 125 dédié spécifiquement aux transducteurs 103 de la sous-matrice 105, reliant les m*n transducteurs 103 de la sous-matrice 105 aux K circuits d'émission-réception de l'ensemble 122 correspondant.

Ainsi, le circuit électronique de commande 120 comprend (M/m)* (N/n) ensembles 122 de K circuits d'émission-réception 123ₖ chacun, soit un total de (M/n)* (M/m) *K circuits d'émission-réception 123ₖ, par exemple identiques ou similaires, et (M/m)* (N/n) circuits de routage 125, par exemple identiques ou similaires. Par souci de simplification, un unique circuit de routage 125 a été représenté sur la figure 1. Dans l'exemple de la figure 1, le circuit de commande 120 comprend K=2 circuits d'émission-réception 123₁ et 123₂ par sous-matrice 105, soit un total de 6x6x2=72 circuits d'émission-réception 123ₖ.

Dans l'exemple de la figure 1, chaque transducteur 103 ne peut être relié qu'à un ou plusieurs circuits d'émission-réception 123ₖ de l'ensemble 122 de circuits d'émission-réception associé à la sous-matrice 105 auquel il appartient, par l'intermédiaire du circuit de routage 125 correspondant. Autrement dit, un transducteur 103 d'une sous-matrice 105 ne peut pas être relié à un circuit d'émission-réception 123ₖ d'un ensemble 122 associé à une autre sous-matrice 105.

Selon un aspect du mode de réalisation de la figure 1, chaque sous-matrice 105 comprend au moins un transducteur 103, que l'on appellera ci-après transducteur mobile, pouvant être, par l'intermédiaire du circuit de routage 125 associé à la sous-matrice 105, déconnecté ou connecté à l'un quelconque, seul, parmi plusieurs circuits d'émission-réception 123ₖ prédéfinis parmi les K circuits d'émission-réception de l'ensemble 122 correspondant. Chaque sous-matrice 105 peut comprendre plusieurs transducteurs mobiles.

Chaque sous-matrice 105 peut en outre comprendre un ou plusieurs autres transducteurs 103 que l'on appellera ci-après transducteurs fixes, chaque transducteur fixe pouvant être, par l'intermédiaire du circuit de routage 125 associé à la sous-matrice 105, déconnecté ou connecté à un unique circuit d'émission-réception 123ₖ prédéfini parmi les K circuits d'émission-réception de l'ensemble 122 correspondant.

Les (M/m)*(N/n) circuits de routage 125 sont par exemple commandables individuellement. Pour cela, le circuit électronique de commande 120 peut comporter un circuit de contrôle CTRL unique relié à des bornes de commande (non détaillées sur la figure 1) des différents circuits 125.

La figure 2 illustre plus en détail un exemple de réalisation d'un circuit de routage configurable 125 du dispositif de la figure 1. Par souci de clarté, un unique circuit de routage 125, ainsi que la sous-matrice 105 de transducteurs 103 et l'ensemble 122 de circuits d'émission-réception 123ₖ associés à ce circuit de routage, ont été représentés sur la figure 2.

On considère dans cet exemple la configuration illustrée sur la figure 1, dans laquelle m=n=2 et K=2. Chaque circuit 125 relie ainsi quatre transducteurs élémentaires 103 à deux circuits d'émission-réception 123₁ et 123₂.

Dans l'exemple de la figure 2, dans chaque sous-matrice 105 deux des transducteurs 103 sont des transducteurs fixes, et les deux autres transducteurs 103 sont des transducteurs mobiles. Les transducteurs fixes sont disposés sur une première diagonale de la sous-matrice, et les transducteurs mobiles sont disposés sur la deuxième diagonale de la sous-matrice. Dans l'exemple représenté, les deux transducteurs fixes correspondent respectivement aux transducteurs positionnés en haut à gauche (position (a)) et en bas à droite (position (d)) dans la sous-matrice 105, et les deux transducteurs mobiles correspondent respectivement aux transducteurs positionnés en haut à droite (position (b)) et en bas à gauche (position (c)) dans la sous-matrice 105.

Les différentes possibilités de connexion des transducteurs 103 de la sous-matrice 105 aux circuits d'émission-réception 123ₖ de l'ensemble 122, par l'intermédiaire du circuit de routage configurable 125, vont maintenant être décrites.

Le premier transducteur fixe (position (a)) peut être soit déconnecté, c'est-à-dire isolé électriquement de l'ensemble des circuits d'émission-réception 123ₖ du dispositif, soit connecté au circuit d'émission-réception 123₁ de l'ensemble 122. Ce transducteur, appelé ci-après transducteur 103(a), ne peut en revanche être connecté à aucun autre circuit d'émission-réception 123ₖ du dispositif.

Le deuxième transducteur fixe (position (d)) peut être soit déconnecté, soit connecté au circuit d'émission-réception 123₂ de l'ensemble 122. Ce transducteur, appelé ci-après transducteur 103(d), ne peut en revanche être connecté à aucun autre circuit d'émission-réception 123ₖ du dispositif.

Le premier transducteur mobile (position (b)) peut être soit déconnecté, soit connecté à l'un quelconque, seul, des circuits d'émission-réception 123₁ et 123₂ de l'ensemble 122. Ce transducteur, appelé ci-après transducteur 103(b), ne peut en revanche être connecté à aucun autre circuit d'émission-réception 123ₖ du dispositif.

De façon similaire, le deuxième transducteur mobile (position (d)) peut être soit déconnecté, soit connecté à l'un quelconque, seul, des circuits d'émission-réception 123₁ et 123₂ de l'ensemble 122. Ce transducteur, appelé ci-après transducteur 103(d), ne peut en revanche être connecté à aucun autre circuit d'émission-réception 123ₖ du dispositif.

Sur la figure 2, le circuit 125 a été représenté de façon schématique sous la forme de 4 commutateurs SW1, SW2, SW3 et SW4.

Le commutateur SW1 est un commutateur à deux états ayant une première borne de conduction n1 reliée, par exemple connectée, à une électrode du transducteur 103(a), et une deuxième borne de conduction n2 reliée, par exemple connectée, à une borne d'entrée ou de sortie du circuit d'émission-réception 123₁. Dans un premier état, dit état ouvert, du commutateur SW1, les bornes n1 et n2 du commutateur SW1 sont isolées électriquement l'une de l'autre. Dans un deuxième état, dit état fermé, du commutateur SWl, les bornes n1 et n2 du commutateur SW1 sont connectées électriquement l'une à l'autre.

Le commutateur SW2 est un commutateur à trois états ayant une première borne de conduction n1 reliée, par exemple connectée, à une électrode du transducteur 103(b), une deuxième borne de conduction n2 reliée, par exemple connectée, à une borne d'entrée ou de sortie du circuit d'émission-réception 123₁, et une troisième borne de conduction n3, isolée électriquement de la borne n2, reliée, par exemple connectée, à une borne d'entrée ou de sortie du circuit d'émission-réception 123₂. Dans un premier état, dit état ouvert, du commutateur SW2, la borne n1 du commutateur SW2 est isolée électriquement de ses bornes n2 et n3. Dans un deuxième état du commutateur SW2, les bornes n1 et n2 du commutateur SW2 sont connectées électriquement l'une à l'autre. Dans un troisième état du commutateur SW2, les bornes n1 et n3 du commutateur SW2 sont connectées électriquement l'une à l'autre.

Le commutateur SW3 est un commutateur à trois états ayant une première borne de conduction n1 reliée, par exemple connectée, à une électrode du transducteur 103(c), une deuxième borne de conduction n2 reliée, par exemple connectée, à une borne d'entrée ou de sortie du circuit d'émission-réception 123₁, et une troisième borne de conduction n3, isolée électriquement de la borne n2, reliée, par exemple connectée, à une borne d'entrée ou de sortie du circuit d'émission-réception 123₂. Dans un premier état, dit état ouvert, du commutateur SW3, la borne n1 du commutateur SW3 est isolée électriquement de ses bornes n2 et n3. Dans un deuxième état du commutateur SW3, les bornes n1 et n2 du commutateur SW3 sont connectées électriquement l'une à l'autre. Dans un troisième état du commutateur SW3, les bornes n1 et n3 du commutateur SW3 sont connectées électriquement l'une à l'autre.

Le commutateur SW4 est un commutateur à deux états ayant une première borne de conduction n1 reliée, par exemple connectée, à une électrode du transducteur 103(d), et une deuxième borne de conduction n2 reliée, par exemple connectée, à une borne d'entrée ou de sortie du circuit d'émission-réception 123₂. Dans un premier état, dit état ouvert, du commutateur SW4, les bornes n1 et n2 du commutateur SW4 sont isolées électriquement l'une de l'autre. Dans un deuxième état, dit état fermé, du commutateur SW4, les bornes n1 et n2 du commutateur SW4 sont connectées électriquement l'une à l'autre.

Ainsi, dans cet exemple, deux transducteurs 103 quelconques de la sous-matrice 105 peuvent être commandés individuellement en parallèle par l'intermédiaire respectivement des circuits d'émission-réception 123₁ et 123₂. associés à la sous-matrice 105. Alternativement, deux transducteurs quelconques, à l'exception des deux transducteurs fixes 103(a) et 103(d), peuvent être commandés simultanément par l'intermédiaire du même circuit d'émission-réception 123₁ ou 123₂.

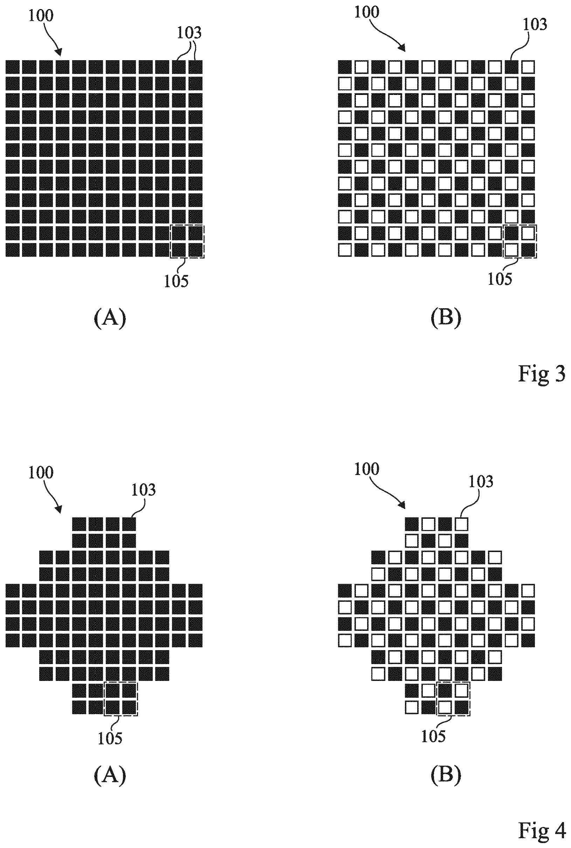

La figure 3 illustre un exemple d'un procédé d'acquisition d'une image ultrasonore au moyen du dispositif décrit en relation avec les figures 1 et 2.

Dans cet exemple, le procédé d'acquisition comprend une phase d'émission d'une onde ultrasonore, suivie d'une phase de réception d'un écho de l'onde ultrasonore émise.

Lors de la phase d'émission, dans chaque sous-matrice 105, tous les transducteurs 103 de la sous-matrice 105 sont connectés simultanément aux circuits d'émission 123ₖ associés à la sous-matrice, par l'intermédiaire du circuit de routage 125 correspondant. Cette configuration est illustrée par la vue (A) de la figure 3, qui correspond à une vue de face de la matrice 100 de la figure 1, sur laquelle on a représenté en noir les transducteurs 103 actifs en émission, c'est-à-dire les transducteurs connectés à une borne de sortie d'un circuit d'émission-réception 123ₖ pendant la phase d'émission, à savoir la totalité des transducteurs 103 dans cet exemple. Plus particulièrement, en considérant l'exemple décrit en relation avec la figure 2, dans chaque sous-matrice 105, deux transducteurs 103, par exemple le transducteur fixe 103(a) et le transducteur mobile 103(b), peuvent être connectés simultanément à une même borne de sortie du circuit d'émission-réception 123₁ de la sous-matrice, et deux autres transducteurs 103, par exemple le transducteur mobile 103(c) et le transducteur fixe 103(d), peuvent être connectés simultanément à une borne de sortie du circuit d'émission-réception 123₂ de la sous-matrice. A titre de variante, les transducteurs 103(a) et 103(c) peuvent être connectés simultanément au circuit d'émission-réception 123₁, et les transducteurs 103(b) et 103(d) peuvent être connectés simultanément au circuit d'émission-réception 123₂. Chaque circuit d'émission-réception 123ₖ applique alors aux transducteurs 103 auxquels il est connecté un même signal électrique d'excitation de façon à provoquer l'émission d'une onde ultrasonore par ces transducteurs. Les signaux d'excitation appliqués par les différents circuits d'émission-réception 123ₖ d'une même sous-matrice 105 peuvent être identiques ou différenciés. De plus, les signaux d'excitation appliqués par les circuits d'émission-réception 123ₖ de sous-matrices 105 distinctes peuvent être identiques ou différenciés.

Lors de la phase de réception, dans chaque sous-matrice 105, seuls K transducteurs 103 distincts sont connectés respectivement aux K circuits d'émission-réception 123ₖ associés à la sous-matrice, par l'intermédiaire du circuit de routage 125 correspondant. Les autres transducteurs 103 sont déconnectés. Autrement dit, un unique transducteur 103 est connecté à chaque circuit d'émission 123ₖ, et chaque transducteur 103 est connecté au plus à un seul circuit d'émission-réception 123ₖ. Cette configuration est illustrée par la vue (B) de la figure 3, qui correspond à une vue de face de la matrice 100 de la figure 1, sur laquelle on a représenté en noir les transducteurs 103 actifs en réception, c'est-à-dire les transducteurs connectés à une borne d'entrée d'un circuit d'émission-réception 123ₖ pendant la phase de réception, et en blanc les transducteurs 103 inactifs en réception, c'est-à-dire les transducteurs non connectés à une borne d'entrée d'un circuit d'émission-réception 123ₖ pendant la phase de réception. Plus particulièrement, dans l'exemple décrit en relation avec la figure 2, dans chaque sous-matrice 105, un seul transducteur 103, par exemple le transducteur 103(a), est connecté à une borne d'entrée du circuit d'émission-réception 123₁, et un seul autre transducteur 103, par exemple le transducteur 103(d), est connecté simultanément à une borne d'entrée du circuit d'émission-réception 123₂. A titre de variante, seuls les transducteurs 103(b) et 103(d) sont connectés simultanément respectivement aux circuits d'émission-réception 123₁ et 123₂. De préférence, les transducteurs activés en réception, sont régulièrement répartis de façon que la distance entre deux transducteurs 103 voisins activés en réception soit sensiblement la même dans la direction des lignes et dans la direction des colonnes, et soit sensiblement constante sur toute la surface de la matrice 100. Ceci est en particulier le cas dans l'exemple de la vue (B) de la figure 3, dans lequel seuls les transducteurs d'une même diagonale (les transducteurs 103(a) et 103(d) dans cet exemple) de chaque sous-matrice 105 sont activés en réception. Lors de la phase de réception, chaque circuit 123ₖ lit un signal électrique représentatif d'un écho ultrasonore reçu par le transducteur 103 auquel il est connecté.

Un avantage du procédé de la figure 3 est qu'il permet d'obtenir une image de résolution relativement élevée dans la mesure où, lors de la phase de réception, chacun des (M/m)*(N/n)*K transducteurs 103 activés en réception est lu individuellement par un circuit d'émission-réception 123ₖ spécifique. De plus, le fait d'activer simultanément tous les transducteur 103 lors de la phase d'émission permet d'envoyer une énergie mécanique relativement élevée dans le milieu à analyser, et donc d'obtenir une image présentant un rapport signal sur bruit relativement élevé.

A titre de variante, dans au moins certaines sous-matrices 105 de l'ensemble 100, une partie seulement des transducteurs 103 de la sous-matrice sont activés lors de la phase d'émission. Par ailleurs, à titre de variante, dans au moins certaines sous-matrices 105 de l'ensemble 100, plusieurs transducteurs 103 de la sous-matrice sont connectés à un même circuit d'émission-réception 123ₖ lors de la phase de réception. Dans ce cas, les signaux reçus sont sommés en entrée du circuit d'émission-réception 123ₖ, par exemple tel que décrit dans la demande de brevet FR3086063 susmentionnée.

Ainsi, la solution décrite ci-dessus, de prévoir un rapport de K circuits d'émission-réception pour m*n transducteurs, constitue un compromis avantageux en terme de qualité d'image et de complexité des circuits de commande, par rapport :
- d'une part aux dispositifs dits entièrement peuplés, non configurables, dans lesquels chaque transducteur est associé à un circuit d'émission-réception dédié (rapport de 1 pour 1 entre les circuits d'émission-réception et les transducteurs) ; et
- d'autre part aux dispositifs du type décrit dans la demande de brevet FR3086063 susmentionnée, comportant un unique circuit d'émission-réception par sous-matrice 105 (rapport de 1 pour m*n entre les circuits d'émission-réception et les transducteurs).

Ce compromis, combiné avec la prévision de transducteurs mobiles, c'est-à-dire pouvant être connectés au choix, par l'intermédiaire des circuits de routage 125, à différents circuits d'émission-réception, permet de mettre en oeuvre une grande variété de scénarios d'acquisition, et ainsi de réaliser des analyses de très grande précision. La prévision optionnelle de transducteurs fixes dans chaque sous-matrice 105 permet avantageusement de limiter la complexité des circuits de routage 125.

Les essais réalisés par les inventeurs ont notamment montré que pour un même nombre et un même agencement des transducteurs élémentaires 103, la qualité des images acquises avec un dispositif du type décrit en relation avec les figures 1 et 2 et selon le procédé de commande de la figure 3 est sensiblement la même qu'avec un dispositif entièrement peuplé (un circuit d'émission-réception par transducteur élémentaire), notamment en termes de rapport contraste sur bruit.

La figure 4 illustre une variante du dispositif d'acquisition décrit en relation avec les figures 1 et 2 et du procédé d'acquisition décrit en relation avec la figure 3.

La variante de la figure 4 diffère de ce qui a été décrit précédemment principalement en ce que, dans cette variante, des sous-matrices 105 situées dans les quatre coins de la matrice 100 du dispositif de la figure 1, ainsi que les circuits de routage 125 et les circuits d'émission réception 123ₖ correspondants, ont été omis. Ainsi, au lieu d'avoir une forme générale sensiblement carrée comme dans l'exemple de la figure 1, l'ensemble 100 de transducteurs élémentaires 103 du dispositif d'acquisition de la figure 4 présente une forme générale sensiblement circulaire. Pour le reste, l'agencement et le fonctionnement du dispositif sont identiques ou similaires à ce qui a été décrit ci-dessus en relation avec les figures 1 à 3.

Les essais réalisés par les inventeurs ont montré que la perte de qualité d'images liée à la suppression des transducteurs des coins de la matrice est négligeable, pour un gain significatif en termes de coût et de complexité, lié à la réduction du nombre de transducteurs, du nombre de circuits de routage configurables, du nombre de circuits d'émission-réception, mais également de la quantité de signaux à traiter en entrée des voies d'émission et en sortie des voies de réception du dispositif.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, les modes de réalisation décrits ne se limitent pas aux exemples décrits ci-dessus dans lesquels les transducteurs élémentaires 103 du dispositif d'acquisition sont agencés en ligne et en colonne. Plus généralement, l'ensemble 100 de transducteurs élémentaires 103 du dispositif d'acquisition peut avoir tout autre agencement que ceux décrits ci-dessus. De plus, les modes de réalisation décrits ne se limitent pas aux exemples particuliers décrits ci-dessus dans lesquels les sous-ensemble 105 de transducteurs élémentaires 103 de l'ensemble 100 partageant un même ensemble 122 de K circuits d'émission-réception 123ₖ sont des matrices de transducteurs voisins. Plus généralement, les transducteurs 103 de chaque sous-ensemble 105 peuvent être agencés selon toute autre disposition, pour autant que le nombre P de transducteurs 103 de chaque sous-ensemble 105 soit strictement supérieur au nombre K de circuits d'émission-réception 123ₖ de l'ensemble 122 correspondant, avec K supérieur ou égal à 2.

## Revendications

1. Dispositif d'imagerie ultrasonore comportant un ensemble (100) de transducteurs ultrasonores (103) répartis en une pluralité de sous-ensembles (105) de P transducteurs (103) chacun, le dispositif comportant, pour chaque sous-ensemble (105) :
- K circuits d'émission-réception (123ₖ) ; et
- un circuit de routage configurable (125) reliant les P transducteurs (103) du sous-ensemble (105) aux K circuits d'émission-réception (123ₖ),
dans lequel P et K sont des entiers supérieurs ou égaux à 2, avec K strictement inférieur à P,
et dans lequel chaque sous-ensemble (105) comprend au moins un transducteur (103(b), 103(c)), dit transducteur mobile, pouvant être, par l'intermédiaire du circuit de routage (125), déconnecté ou connecté à l'un quelconque parmi plusieurs circuits d'émission-réception (123ₖ) prédéfinis parmi les K circuits d'émission-réception (123ₖ) du sous-ensemble,
le dispositif étant **caractérisé en ce que** chaque sous-ensemble (105) comprend en outre au moins un transducteur (103(a), 103(d)), dit transducteur fixe, pouvant être, par l'intermédiaire du circuit de routage (125) du sous-ensemble, déconnecté ou connecté à un unique circuit d'émission-réception prédéfini parmi les K circuits d'émission-réception (123ₖ) du sous-ensemble.

2. Dispositif selon la revendication 1, dans lequel les transducteurs (103) de l'ensemble (100) sont disposés selon des rangées et des colonnes.

3. Dispositif selon la revendication 2, dans lequel les transducteurs (103) de l'ensemble (100) sont disposés selon une matrice.

4. Dispositif selon la revendication 3, dans lequel les transducteurs (103) de l'ensemble (100) forment un motif de forme générale circulaire.

5. Dispositif selon l'une quelconque des revendications 1 à 4, dans lequel chaque sous-ensemble (105) est une matrice de transducteurs (103) voisins de l'ensemble (100).

6. Dispositif selon la revendication 5, dans lequel chaque sous-ensemble (105) comprend une pluralité de transducteurs mobiles (103(b), 103(c)) disposés selon une diagonale de la matrice de transducteurs (103) voisins formant le sous-ensemble (105).

7. Dispositif selon la revendication 6, dans lequel chaque sous-ensemble (105) comprend une pluralité de transducteurs fixes (103(a), 103(d)) disposés selon une autre diagonale de la matrice de transducteurs voisins (103) formant le sous-ensemble (105).

8. Dispositif selon l'une quelconque des revendications 5 à 7, dans lequel chaque sous-ensemble (105) est une sous-matrice de 2x2 transducteurs (103) voisins.

9. Dispositif selon l'une quelconque des revendications 1 à 8, comprenant en outre un circuit de contrôle (CTRL) adapté à commander les circuits de routage configurables (125) des différents sous-ensembles (105).

10. Dispositif selon la revendication 9, dans lequel le circuit de contrôle (CTRL) est configuré pour, lors d'une phase d'acquisition d'une image ultrasonore, dans chaque sous-ensemble (105) de transducteurs (103) :
- connecter les P transducteurs (103) du sous-ensemble aux K circuits d'émission-réception (123ₖ) du sous-ensemble par l'intermédiaire du circuit de routage configurable (125) du sous ensemble pendant une phase d'émission d'une onde ultrasonore ; puis
- connecter un unique transducteur (103) du sous-ensemble à chaque circuit d'émission-réception (123ₖ) du sous-ensemble pendant une phase de réception d'un écho de l'onde ultrasonore émise.

## Patentansprüche

1. Ultraschallabbildungsvorrichtung, die eine Anordnung (100) von Ultraschallwandlern (103) aufweist, die in einer Vielzahl von Unteranordnungen (105) von jeweils P Wandlern (103) verteilt sind, wobei die Vorrichtung für jede Unteranordnung (105) Folgendes aufweist:
- K Sender-Empfänger-Schaltungen (123ₖ); und
- eine konfigurierbare Routing-Schaltung (125), die die P Wandler (103) der Unteranordnung (105) mit den K Sender-Empfänger-Schaltungen (123ₖ) koppelt,
wobei P und K ganze Zahlen größer oder gleich 2 sind, wobei K kleiner als P ist,
und wobei jede Unteranordnung (105) mindestens einen Wandler (103(b), 103(c)) aufweist, der als mobiler Wandler bezeichnet wird, der geeignet ist, und zwar über die Routing-Schaltung (125), von einer beliebigen aus einer Vielzahl von vordefinierten Sender-Empfänger-Schaltungen (123ₖ) unter den K Sender-Empfänger-Schaltungen (123ₖ) der Unteranordnung getrennt oder damit verbunden zu werden,
wobei die Vorrichtung **dadurch gekennzeichnet ist, dass**
jede Unteranordnung (105) außerdem mindestens einen Wandler (103(a), 103(d)) aufweist, der als fester Wandler bezeichnet wird, der geeignet ist, und zwar über die Routing-Schaltung (125) der Untereinheit, von einer einzigen vordefinierten Sender-Empfänger-Schaltung unter den K Sender-Empfänger-Schaltungen (123ₖ) der Untereinheit getrennt oder damit verbunden zu werden.

2. Vorrichtung nach Anspruch 1, wobei die Wandler (103) der Anordnung (100) in Reihen und Spalten angeordnet sind.

3. Vorrichtung nach Anspruch 2, wobei die Wandler (103) der Anordnung (100) in einem Array angeordnet sind.

4. Vorrichtung nach Anspruch 3, wobei die Wandler (103) der Anordnung (100) ein Muster von allgemein kreisförmiger Form bilden.

5. Vorrichtung nach einem der Ansprüche 1 bis 4, wobei jede Unteranordnung (105) ein Array von benachbarten Wandlern (103) der Anordnung (100) ist.

6. Vorrichtung nach Anspruch 5, wobei jede Unteranordnung (105) eine Vielzahl von mobilen Wandlern (103(b), 103(c)) aufweist, die entlang einer Diagonale des Arrays von benachbarten Wandlern (103) angeordnet sind, die die Unteranordnung (105) bilden.

7. Vorrichtung nach Anspruch 6, wobei jede Unteranordnung (105) eine Vielzahl von festen Wandlern (103(a), 103(d)) aufweist, die entlang einer anderen Diagonale des Arrays von benachbarten Wandlern (103) angeordnet sind, die die Unteranordnung (105) bilden.

8. Vorrichtung nach einem der Ansprüche 5 bis 7, wobei jede Unteranordnung (105) ein Unter-Array von 2x2 benachbarten Wandlern (103) ist.

9. Vorrichtung nach einem der Ansprüche 1 bis 8, die ferner eine Steuerschaltung (CTRL) aufweist, die zum Steuern der konfigurierbaren Routing-Schaltungen (125) der verschiedenen Unteranordnungen (105) geeignet ist.

10. Vorrichtung nach Anspruch 9, wobei die Steuerschaltung (CTRL) konfiguriert ist, während einer Erfassungsphase eines Ultraschallbildes, und zwar in jeder Unteranordnung (105) von Wandlern (103):
- die P Wandler (103) der Unteranordnung mit den K Sender-Empfänger-Schaltungen (123ₖ) der Unteranordnung über die konfigurierbare Routing-Schaltung (125) der Unteranordnung während einer Emissionsphase einer Ultraschallwelle zu verbinden; und dann
- einen einzelnen Wandler (103) der Unteranordnung mit jeder Sender-Empfänger-Schaltung (123ₖ) der Unteranordnung während einer Empfangsphase eines Echos der emittierten Ultraschallwelle zu verbinden.

## Claims

1. Ultrasound imaging device comprising an assembly (100) of ultrasound transducers (103) distributed in a plurality of sub-assemblies (105) of P transducers (103) each, the device comprising, for each sub-assembly (105):
- K transceiver circuits (123ₖ); and
- a configurable routing circuit (125) coupling the P transducers (103) of the sub-assembly (105) to the K transceiver circuits (123ₖ),
wherein P and K are integers greater than or equal to 2, with K smaller than P,
and wherein each sub-assembly (105) comprises at least one transducer (103(b), 103(c)), called mobile transducer, capable of being, via the routing circuit (125), disconnected or connected to any one among a plurality of predefined transceiver circuits (123ₖ) among the K transceiver circuits (123ₖ) of the sub-assembly, the device being **characterized in that** each sub-assembly (105) further comprises at least one transducer (103(a), 103(d)), called fixed transducer, capable of being, via the routing circuit (125) of the sub-assembly, disconnected or connected to a single predefined transceiver circuit from among K transceiver circuits (123ₖ) of the sub-assembly.

2. Device according to claim 1, wherein the transducers (103) of the assembly (100) are arranged in rows and columns.

3. Device according to claim 2, wherein the transducers (103) of the assembly (100) are arranged in an array.

4. Device according to claim 3, wherein the transducers (103) of the assembly (100) form a pattern of generally circular shape.

5. Device according to any of claims 1 to 4, wherein each sub-assembly (105) is an array of neighboring transducers (103) of the assembly (100).

6. Device according to claim 5, wherein each sub-assembly (105) comprises a plurality of mobile transducers (103(b), 103(c)), arranged along a diagonal of the array of neighboring transducers (103) forming the sub-assembly (105).

7. Device according to claim 6, wherein each sub-assembly (105) comprises a plurality of fixed transducers (103(a), 103(d)), arranged along another diagonal of the array of neighboring transducers (103) forming the sub-assembly (105) .

8. Device according to any of claims 5 to 7, wherein each sub-assembly (105) is a sub-array of 2x2 neighboring transducers (103).

9. Device according to any of claims 1 to 8, further comprising a control circuit (CTRL) adapted to controlling the configurable routing circuits (125) of the different sub-assemblies (105).

10. Device according to claim 9, wherein the control circuit (CTRL) is configured to, during a phase of acquisition of an ultrasound image, in each sub-assembly (105) of transducers (103):
- connect the P transducers (103) of the sub-assembly to the K transceiver circuits (123ₖ) of the sub-assembly via the configurable routing circuit (125) of the sub-assembly during a phase of emission of an ultrasound wave; and then
- connect a single transducer (103) of the sub-assembly to each transceiver circuit (123ₖ) of the sub-assembly during a phase of reception of an echo of the emitted ultrasound wave.
